# EUROPEAN PATENT SPECIFICATION

(11) **EP 4 127 991 B1**
(45) Date of publication and mention of the grant of the patent: **01.10.2025**
(21) Application number: 21725807.8
(22) Date of filing: 31.03.2021
(51) Int. Cl.: G06F 21/52, G06F 21/54, G06F 21/55

(54) **FLOW CONTROL INTEGRITY**
FLUSSSTEUERUNGSINTEGRITÄT
INTÉGRITÉ DE COMMANDE DE FLUX

(30) Priority: 01.04.2020 US 202063003494 P
(43) Date of publication of application: 08.02.2023
(73) Proprietor: Mobileye Vision Technologies Ltd., 9777019 Jerusalem (IL)
(72) Inventor: KIPNIS, Aviad, 9043606 Efrat (IL)
(74) Representative: Hermann, Felix
(86) International application number: PCT/IB2021/000196
(87) International publication number: WO 2021/198771

(56) References cited:
- WO-A1-2018/041342
- US-A1- 2016 180 079
- US-B1- 10 579 457

## Description

### BACKGROUND

Advanced driver assistance systems (ADAS), and autonomous vehicle (AV) systems use cameras and other sensors together with object classifiers, which are designed to detect specific objects in an environment of a vehicle navigating a road. Object classifiers are designed to detect predefined objects and are used within ADAS and AV systems to control the vehicle or alert a driver based on the type of object that is detected its location, etc.

As ADAS and AV systems progress towards fully autonomous operation, it would be beneficial to protect data generated by these systems.

US 10,579,457 B1 discloses a processor and methods for detecting fault in a control flow. The processor includes an instruction set architecture defining a pair of FLOWSET and FLOWCHECK opcodes and FLOWSET and FLOWCHECK operations. This pair of opcodes and associated operation works together with a CFI shadow stack to detect faults in an intended flow of instructions. Upon detection of a fault, a fault notice is provided. The methods of detecting fault in a control flow may be implemented using hardware or software and a shadow stack.

US 2016/180079 A1 discloses a method that comprises filtering branch trap events at a branch event filter, monitoring a branch event filter to capture indirect branch trap events that cause a control flow trap exception, receiving the indirect branch trap events at a handler and the handler processing the indirect branch trap events.

WO 2018/041342 A1 discloses a method for avoiding a return-oriented programming attempt on a computer, the method comprising: Initial processing of a set of instructions, wherein the set of instructions comprises a first kind of instructions and a second kind of instructions. The initial processing of the set of instructions comprises: Storing at least a part of each first kind of instruction within the set of instructions into a first computer memory. Storing at least a part of each second kind of instruction within the set of instructions into a second computer memory. Storing a storing reference into the first computer memory, for each stored second kind of instruction within the second computer memory, wherein each respective storing reference indicates a storing address of each respective stored second kind of instruction within the second computer memory. And locking the second computer memory, for disallowing a write access to the second computer memory, after a termination of the initial processing of the set of instructions.

### SUMMARY

The following detailed description refers to the accompanying drawings. Wherever possible, the same reference numbers are used in the drawings and the following description to refer to the same or similar parts. While several illustrative embodiments are described herein, modifications, adaptations and other implementations are possible. For example, substitutions, additions, or modifications may be made to the components illustrated in the drawings, and the illustrative methods described herein may be modified by substituting, reordering, removing, or adding steps to the disclosed methods. Accordingly, the following detailed description is not limited to the disclosed embodiments and examples.

The invention is defined by the subject matter of independent claims 1, 9 and 16. Advantageous embodiments of the invention are subject to the dependent claims and are outlined herein below in more detail.

Disclosed embodiments provide systems and methods that can be used as part of or in combination with autonomous navigation/driving and/or driver assist technology features. Driver assist technology refers to any suitable technology to assist drivers in the navigation and/or control of their vehicles, such as forward collision warning (FCW), lane departure warning (LDW), and traffic sign recognition (TSR), as opposed to fully autonomous driving. In various embodiments, the system may include one, two or more cameras mountable in a vehicle and an associated processor that monitor the environment of the vehicle. In further embodiments, additional types of sensors can be mounted in the vehicle ad can be used in the autonomous navigation and/or driver assist system. In some examples of the presently disclosed subject matter, the system may provide techniques for processing images of an environment ahead of a vehicle navigating a road for training a neural networks or deep learning algorithms to estimate a future path of a vehicle based on images. In yet further examples of the presently disclosed subject matter, the system may provide techniques for processing images of an environment ahead of a vehicle navigating a road using a trained neural network to estimate a future path of the vehicle.

### BRIEF DESCRIPTION OF THE DRAWINGS

The subject matter regarded as the invention is particularly pointed out and distinctly claimed in the concluding portion of the specification. The invention, however, both as to organization and method of operation, together with objects, features, and advantages thereof, may best be understood by reference to the following detailed description when read with the accompanying drawings in which:
FIG. 1 is a block diagram representation of a system consistent with the disclosed embodiments;
FIG. 2A is a diagrammatic side view representation of an exemplary vehicle including a system consistent with the disclosed embodiments;
FIG. 2B is a diagrammatic top view representation of the vehicle and system shown in FIG. 2A consistent with the disclosed embodiments;
FIG. 2C is a diagrammatic top view representation of another embodiment of a vehicle including a system consistent with the disclosed embodiments;
FIG. 2D is a diagrammatic top view representation of yet another embodiment of a vehicle including a system consistent with the disclosed embodiments;
FIG. 2E is a diagrammatic representation of exemplary vehicle control systems consistent with the disclosed embodiments;
FIG. 3 is a diagrammatic representation of an interior of a vehicle including a rearview mirror and a user interface for a vehicle imaging system consistent with the disclosed embodiments;
FIG. 4 illustrates an example of a method;
FIG. 5 illustrates another example of a method;
FIG. 6 illustrates an example of a first software environment and a shadow stack; and
FIG. 7 illustrates an example of a second software environment and a shadow stack.

### DETAILED DESCRIPTION OF THE DRAWINGS

In the following detailed description, numerous specific details are set forth in order to provide a thorough understanding of the invention. However, it will be understood by those skilled in the art that the present invention may be practiced without these specific details. In other instances, well-known methods, procedures, and components have not been described in detail so as not to obscure the present invention.

The subject matter regarded as the invention is particularly pointed out and distinctly claimed in the concluding portion of the specification. The invention, however, both as to organization and method of operation, together with objects, features, and advantages thereof, may best be understood by reference to the following detailed description when read with the accompanying drawings.

It will be appreciated that for simplicity and clarity of illustration, elements shown in the figures have not necessarily been drawn to scale. For example, the dimensions of some of the elements may be exaggerated relative to other elements for clarity. Further, where considered appropriate, reference numerals may be repeated among the figures to indicate corresponding or analogous elements.

Because the illustrated embodiments of the present invention may for the most part, be implemented using electronic components and circuits known to those skilled in the art, details will not be explained in any greater extent than that considered necessary as illustrated above, for the understanding and appreciation of the underlying concepts of the present invention and in order not to obfuscate or distract from the teachings of the present invention.

Any reference in the specification to a method should be applied mutatis mutandis to a system capable of executing the method and should be applied mutatis mutandis to a non-transitory computer readable medium that stores instructions that once executed by a computer result in the execution of the method.

Any reference in the specification to a system and any other component should be applied mutatis mutandis to a method that may be executed by the memory device and should be applied mutatis mutandis to a non-transitory computer readable medium that stores instructions that may be executed by the memory device. For example, there may be provided a method and/or method steps executed by the image processor described in any one of claims. For example, there may be provided a method and/or method steps executed by the image processor described in any one of claims.

Any reference in the specification to a non-transitory computer readable medium should be applied mutatis mutandis to a system capable of executing the instructions stored in the non-transitory computer readable medium and should be applied mutatis mutandis to method that may be executed by a computer that reads the instructions stored in the non-transitory computer readable medium.

Any combination of any module or unit listed in any of the figures, any part of the specification and/or any claims may be provided. Especially any combination of any claimed feature may be provided.

A pixel may be a picture element obtained by a camera or may be a processed picture element.

Before discussing in detail examples of features of the processing images of an environment ahead of a vehicle navigating a road for training a neural networks or deep learning algorithms to estimate a future path of a vehicle based on images or feature of the processing of images of an environment ahead of a vehicle navigating a road using a trained neural network to estimate a future path of the vehicle, there is provided a description of various possible implementations and configurations of a vehicle mountable system that can be used for carrying out and implementing the methods according to examples of the presently disclosed subject matter. In some embodiments, various examples of the system can be mounted in a vehicle, and can be operated while the vehicle is in motion. In some embodiments, the system can implement the methods according to examples of the presently disclosed subject matter.

However, it would be appreciated that embodiments of the present disclosure are not limited to scenarios where a suspected upright object indication is caused by a high-grade road. The suspected upright object indication can be associated with various other circumstances, and can result from other types of image data and also from data that is not image-based or is not exclusively image-based, as well.

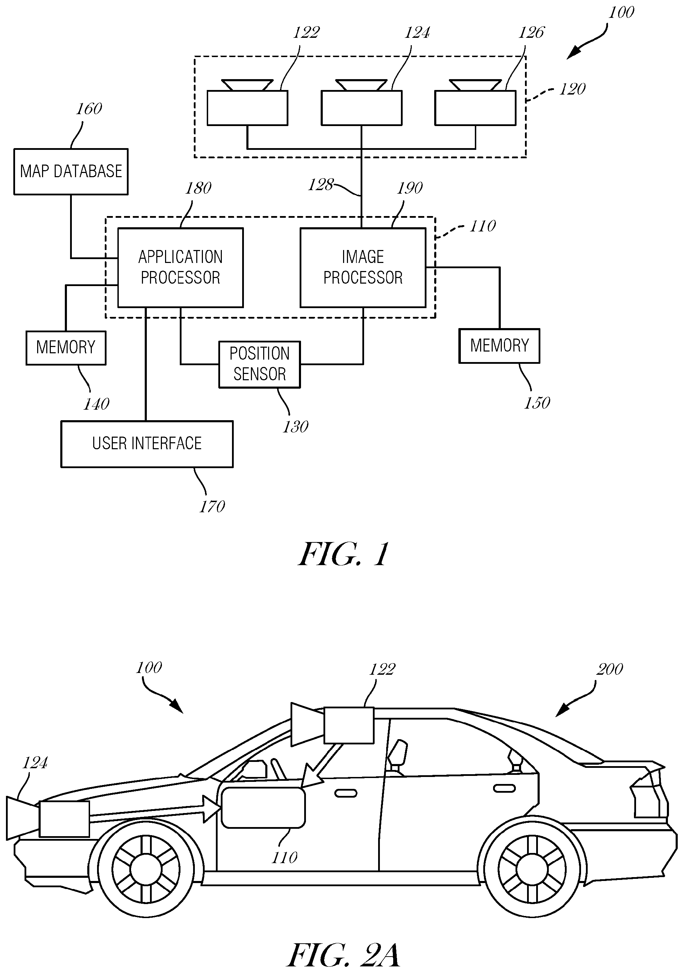

FIG. 1, to which reference is now made, is a block diagram representation of a system consistent with the disclosed embodiments. System 100 can include various components depending on the requirements of a particular implementation. In some examples, system 100 can include a processing unit 110, an image acquisition unit 120 and one or more memory units 140, 150. Processing unit 110 can include one or more processing devices. In some embodiments, processing unit 110 can include an application processor 180, an image processor 190, or any other suitable processing device. Similarly, image acquisition unit 120 can include any number of image acquisition units and components depending on the requirements of a particular application. In some embodiments, image acquisition unit 120 can include one or more image capture devices (e.g., cameras), such as image capture device 122, image capture device 124, and image capture device 126. In some embodiments, system 100 can also include a data interface 128 communicatively connecting processing unit 110 to image acquisition unit 120. For example, data interface 128 can include any wired and/or wireless link or links for transmitting image data acquired by image acquisition unit 120 to processing unit 110.

Both application processor 180 and image processor 190 can include various types of processing devices. For example, either or both of application processor 180 and image processor 190 can include one or more microprocessors, preprocessors (such as image preprocessors), graphics processors, central processing units (CPUs), support circuits, digital signal processors, integrated circuits, memory, or any other types of devices suitable for running applications and for image processing and analysis. In some embodiments, application processor 180 and/or image processor 190 can include any type of single or multi-core processor, mobile device microcontroller, central processing unit, etc. Various processing devices can be used, including, for example, processors available from manufacturers such as Intel^{®}, AMD^{®}), etc. and can include various architectures (e.g., x86 processor, ARM^{®}, etc.).

In some embodiments, application processor 180 and/or image processor 190 can include any of the EyeQ series of processor chips available from Mobileye^{®}. These processor designs each include multiple processing units with local memory and instruction sets. Such processors may include video inputs for receiving image data from multiple image sensors and may also include video out capabilities. In one example, the EyeQ2^{®} uses 90 nm-micron technology operating at 332 Mhz. The EyeQ2^{®} architecture has two floating point, hyper-thread 32-bit RISC CPUs (MIPS32^{®} 34K^{®} cores), five Vision Computing Engines (VCE), three Vector Microcode Processors (VMP^{®}), Denali 64-bit Mobile DDR Controller, 128-bit internal Sonics Interconnect, dual 16-bit Video input and 18-bit Video output controllers, 16 channels DMA and several peripherals. The MIPS34K CPU manages the five VCEs, three VMP.TM. and the DMA, the second MIPS34K CPU and the multi-channel DMA as well as the other peripherals. The five VCEs, three VMP^{®} and the MIPS34K CPU can perform intensive vision computations required by multi-function bundle applications. In another example, the EyeQ3^{®}, which is a third-generation processor and is six times more powerful that the EyeQ2^{®}, may be used in the disclosed examples. In yet another example, the EyeQ4^{®}, the fourth-generation processor, may be used in the disclosed examples.

While FIG. 1 depicts two separate processing devices included in processing unit 110, more or fewer processing devices can be used. For example, in some examples, a single processing device may be used to accomplish the tasks of application processor 180 and image processor 190. In other embodiments, these tasks can be performed by more than two processing devices.

Processing unit 110 can include various types of devices. For example, processing unit 110 may include various devices, such as a controller, an image preprocessor, a central processing unit (CPU), support circuits, digital signal processors, integrated circuits, memory, or any other types of devices for image processing and analysis. The image preprocessor can include a video processor for capturing, digitizing, and processing the imagery from the image sensors. The CPU can include any number of microcontrollers or microprocessors. The support circuits can be any number of circuits generally well known in the art, including cache, power supply, clock, and input-output circuits. The memory can store software that, when executed by the processor, controls the operation of the system. The memory can include databases and image processing software, including a trained system, such as a neural network, for example. The memory can include any number of random access memories, read only memories, flash memories, disk drives, optical storage, removable storage, and other types of storage. In one instance, the memory can be separate from the processing unit 110. In another instance, the memory can be integrated into the processing unit 110.

Each memory 140, 150 can include software instructions that when executed by a processor (e.g., application processor 180 and/or image processor 190), can control operation of various aspects of system 100. These memory units can include various databases and image processing software. The memory units can include random access memory, read only memory, flash memory, disk drives, optical storage, tape storage, removable storage, and/or any other types of storage. In some examples, memory units 140, 150 can be separate from the application processor 180 and/or image processor 190. In other embodiments, these memory units can be integrated into application processor 180 and/or image processor 190.

In some embodiments, the system can include a position sensor 130. The position sensor 130 can include any type of device suitable for determining a location associated with at least one component of system 100. In some embodiments, position sensor 130 can include a GPS receiver. Such receivers can determine a user position and velocity by processing signals broadcasted by global positioning system satellites. Position information from position sensor 130 can be made available to application processor 180 and/or image processor 190.

In some embodiments, the system 100 can be operatively connectible to various systems, devices, and units onboard a vehicle in which the system 100 can be mounted, and through any suitable interfaces (e.g., a communication bus) the system 100 can communicate with the vehicle's systems. Examples of vehicle systems with which the system 100 can cooperate include: a throttling system, a braking system, and a steering system.

In some embodiments, the system 100 can include a user interface 170. User interface 170 can include any device suitable for providing information to or for receiving inputs from one or more users of system 100, including, for example, a touchscreen, microphone, keyboard, pointer devices, track wheels, cameras, knobs, buttons, etc. Information can be provided by the system 100, through the user interface 170, to the user.

In some embodiments, the system 100 can include a map database 160. The map database 160 can include any type of database for storing digital map data. In some examples, map database 160 can include data relating to a position, in a reference coordinate system, of various items, including roads, water features, geographic features, points of interest, etc. Map database 160 can store not only the locations of such items, but also descriptors relating to those items, including, for example, names associated with any of the stored features and other information about them. For example, locations and types of known obstacles can be included in the database, information about a topography of a road or a grade of certain points along a road, etc. In some embodiments, map database 160 can be physically located with other components of system 100. Alternatively, or additionally, map database 160 or a portion thereof can be located remotely with respect to other components of system 100 (e.g., processing unit 110). In such embodiments, information from map database 160 can be downloaded over a wired or wireless data connection to a network (e.g., over a cellular network and/or the Internet, etc.).

Image capture devices 122, 124, and 126 can each include any type of device suitable for capturing at least one image from an environment. Moreover, any number of image capture devices can be used to acquire images for input to the image processor. Some examples of the presently disclosed subject matter can include or can be implemented with only a single-image capture device, while other examples can include or can be implemented with two, three, or even four or more image capture devices. Image capture devices 122, 124, and 126 will be further described with reference to FIGS. 2A-2E, below.

It would be appreciated that the system 100 can include or can be operatively associated with other types of sensors, including for example: an acoustic sensor, a RF sensor (e.g., radar transceiver), a LIDAR sensor. Such sensors can be used independently of or in cooperation with the image acquisition unit 120. For example, the data from the radar system (not shown) can be used for validating the processed information that is received from processing images acquired by the image acquisition unit 120, e.g., to filter certain false positives resulting from processing images acquired by the image acquisition unit 120, or it can be combined with or otherwise compliment the image data from the image acquisition unit 120, or some processed variation or derivative of the image data from the image acquisition unit 120.

System 100, or various components thereof, can be incorporated into various different platforms. In some embodiments, system 100 may be included on a vehicle 200, as shown in FIG. 2A. For example, vehicle 200 can be equipped with a processing unit 110 and any of the other components of system 100, as described above relative to FIG. 1. While in some embodiments vehicle 200 can be equipped with only a single-image capture device (e.g., camera), in other embodiments, such as those discussed in connection with FIGS. 2A-2E, multiple image capture devices can be used. For example, either of image capture devices 122 and 124 of vehicle 200, as shown in FIG. 2A, can be part of an ADAS (Advanced Driver Assistance Systems) imaging set.

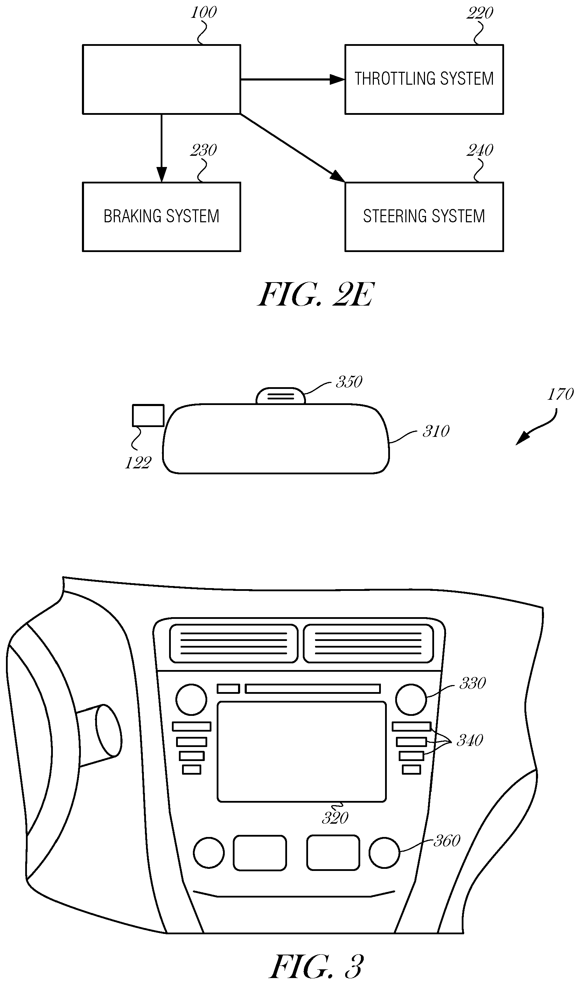

The image capture devices included on vehicle 200 as part of the image acquisition unit 120 can be positioned at any suitable location. In some embodiments, as shown in FIGS. 2A-2E and 3, image capture device 122 can be located in the vicinity of the rearview mirror. This position may provide a line of sight similar to that of the driver of vehicle 200, which can aid in determining what is and is not visible to the driver.

Other locations for the image capture devices of image acquisition unit 120 can also be used. For example, image capture device 124 can be located on or in a bumper of vehicle 200. Such a location can be especially suitable for image capture devices having a wide field of view. The line of sight of bumper-located image capture devices can be different from that of the driver. The image capture devices (e.g., image capture devices 122, 124, and 126) can also be located in other locations. For example, the image capture devices may be located on or in one or both of the side mirrors of vehicle 200, on the roof of vehicle 200, on the hood of vehicle 200, on the trunk of vehicle 200, on the sides of vehicle 200, mounted on, positioned behind, or positioned in front of any of the windows of vehicle 200, and mounted in or near light figures on the front and/or back of vehicle 200, etc. The image acquisition unit 120, or an image capture device that is one of a plurality of image capture devices that are used in an image acquisition unit 120, can have a field-of-view (FOV) that is different than the FOV of a driver of a vehicle, and not always see the same objects. In one example, the FOV of the image acquisition unit 120 can extend beyond the FOV of a typical driver and can thus image objects which are outside the FOV of the driver. In yet another example, the FOV of the image acquisition unit 120 is some portion of the FOV of the driver. In some embodiments, the FOV of the image acquisition unit 120 corresponding to a sector which covers an area of a road ahead of a vehicle and possibly also surroundings of the road.

In addition to image capture devices, vehicle 200 can be include various other components of system 100. For example, processing unit 110 may be included on vehicle 200 either integrated with or separate from an engine control unit (ECU) of the vehicle. Vehicle 200 may also be equipped with a position sensor 130, such as a GPS receiver and may also include a map database 160 and memory units 140 and 150.

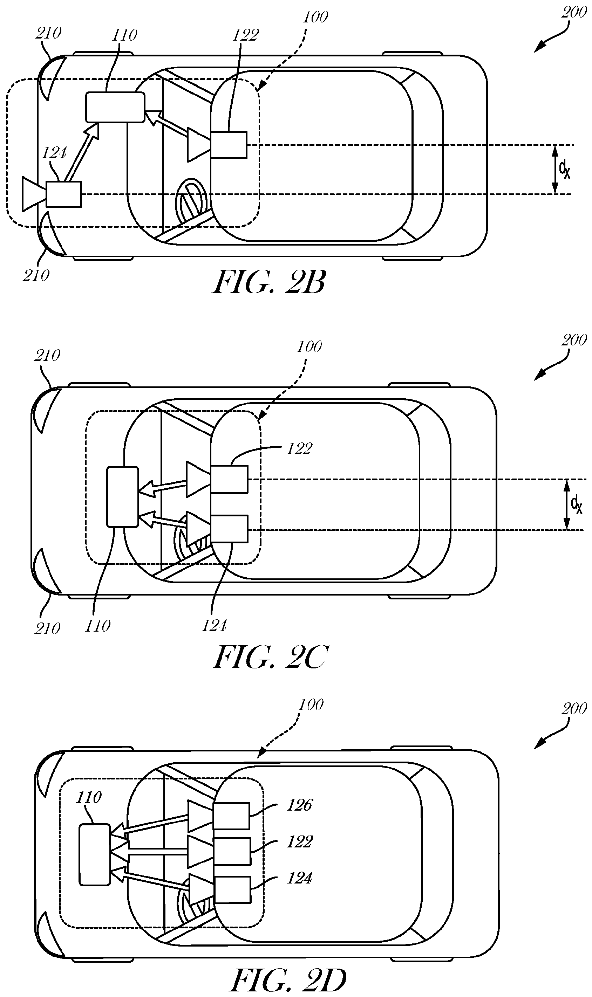

FIG. 2A is a diagrammatic side view representation of a vehicle imaging system according to examples of the presently disclosed subject matter. FIG. 2B is a diagrammatic top view illustration of the example shown in FIG. 2A. As illustrated in FIG. 2B, the disclosed examples can include a vehicle 200 including in its body a system 100 with a first image capture device 122 positioned in the vicinity of the rearview mirror and/or near the driver of vehicle 200, a second image capture device 124 positioned on or in a bumper region (e.g., one of bumper regions 210) of vehicle 200, and a processing unit 110.

As illustrated in FIG. 2C, image capture devices 122 and 124 may both be positioned in the vicinity of the rearview mirror and/or near the driver of vehicle 200. Additionally, while two image capture devices 122 and 124 are shown in FIGS. 2B and 2C, it should be understood that other embodiments may include more than two image capture devices. For example, in the embodiment shown in FIG. 2D, first, second, and third image capture devices 122, 124, and 126, are included in the system 100 of vehicle 200.

As shown in FIG. 2D, image capture devices 122, 124, and 126 may be positioned in the vicinity of the rearview mirror and/or near the driver seat of vehicle 200. The disclosed examples are not limited to any particular number and configuration of the image capture devices, and the image capture devices may be positioned in any appropriate location within and/or on vehicle 200.

It is also to be understood that disclosed embodiments are not limited to a particular type of vehicle 200 and may be applicable to all types of vehicles including automobiles, trucks, trailers, motorcycles, bicycles, self-balancing transport devices and other types of vehicles.

The first image capture device 122 can include any suitable type of image capture device. Image capture device 122 can include an optical axis. In one instance, the image capture device 122 can include an Aptina M9V024 WVGA sensor with a global shutter. In another example, a rolling shutter sensor can be used. Image acquisition unit 120, and any image capture device which is implemented as part of the image acquisition unit 120, can have any desired image resolution. For example, image capture device 122 can provide a resolution of 1280x960 pixels and can include a rolling shutter.

Image acquisition unit 120, and any image capture device which is implemented as part of the image acquisition unit 120, can include various optical elements. In some embodiments one or more lenses can be included, for example, to provide a desired focal length and field of view for the image acquisition unit 120, and for any image capture device which is implemented as part of the image acquisition unit 120. In some examples, an image capture device which is implemented as part of the image acquisition unit 120 can include or be associated with any optical elements, such as a 6 mm lens or a 12 mm lens, for example. In some examples, image capture device 122 can be configured to capture images having a desired (and known) field-of-view (FOV).

The first image capture device 122 may have a scan rate associated with acquisition of each of the first series of image scan lines. The scan rate may refer to a rate at which an image sensor can acquire image data associated with each pixel included in a particular scan line.

FIG. 2E is a diagrammatic representation of vehicle control systems, according to examples of the presently disclosed subject matter. As indicated in FIG. 2E, vehicle 200 can include throttling system 220, braking system 230, and steering system 240. System 100 can provide inputs (e.g., control signals) to one or more of throttling system 220, braking system 230, and steering system 240 over one or more data links (e.g., any wired and/or wireless link or links for transmitting data). For example, based on analysis of images acquired by image capture devices 122, 124, and/or 126, system 100 can provide control signals to one or more of throttling system 220, braking system 230, and steering system 240 to navigate vehicle 200 (e.g., by causing an acceleration, a turn, a lane shift, etc.). Further, system 100 can receive inputs from one or more of throttling system 220, braking system 230, and steering system 240 indicating operating conditions of vehicle 200 (e.g., speed, whether vehicle 200 is braking and/or turning, etc.).

As shown in FIG. 3, the vehicle may also include a user interface 170 for interacting with a driver or a passenger of vehicle. For example, user interface 170 in a vehicle application may include a touch screen 320, knobs 330, buttons 340, and a microphone 350. A driver or passenger of the vehicle may also use handles (e.g., located on or near the steering column of the vehicle including, for example, turn signal handles), buttons (e.g., located on the steering wheel of the vehicle), and the like, to interact with system 100. In some embodiments, microphone 350 may be positioned adjacent to a rearview mirror 310. Similarly, in some embodiments, image capture device 122 may be located near rearview mirror 310. In some embodiments, user interface 170 may also include one or more speakers 360 (e.g., speakers of a vehicle audio system). For example, system 100 may provide various notifications (e.g., alerts) via speakers 360.

As will be appreciated by a person skilled in the art having the benefit of this disclosure, numerous variations and/or modifications may be made to the foregoing disclosed embodiments. For example, not all components are essential for the operation of system 100. Further, any component may be located in any appropriate part of system 100 and the components may be rearranged into a variety of configurations while providing the functionality of the disclosed embodiments. Therefore, the foregoing configurations are examples and, regardless of the configurations discussed above, system 100 can provide a wide range of functionality to analyze the surroundings of the vehicle and, in response to this analysis, navigate and/or otherwise control and/or operate the vehicle . Navigation, control, and/or operation of the vehicle may include enabling and/or disabling (directly or via intermediary controllers, such as the controllers mentioned above) various features, components, devices, modes, systems, and/or subsystems associated with vehicle 200. Navigation, control, and/or operation may alternately or additionally include interaction with a user, driver, passenger, passerby, and/or other vehicle or user, which may be located inside or outside the vehicle , for example by providing visual, audio, haptic, and/or other sensory alerts and/or indications.

As discussed below in further detail and consistent with various disclosed embodiments, system 100 may provide a variety of features related to autonomous driving, semi-autonomous driving and/or driver assist technology. For example, system 100 may analyze image data, position data (e.g., GPS location information), map data, speed data, and/or data from sensors included in the vehicle . System 100 may collect the data for analysis from, for example, image acquisition unit 120, position sensor 130, and other sensors. Further, system 100 may analyze the collected data to determine whether or not the vehicle should take a certain action, and then automatically take the determined action without human intervention. It would be appreciated that in some cases, the actions taken automatically by the vehicle are under human supervision, and the ability of the human to intervene adjust abort or override the machine action is enabled under certain circumstances or at all times. For example, when vehicle 200 navigates without human intervention, system 100 may automatically control the braking, acceleration, and/or steering of the vehicle (e.g., by sending control signals to one or more of throttling system 220, braking system 230, and steering system 240). Further, system 100 may analyze the collected data and issue warnings, indications, recommendations, alerts, or instructions to a driver, passenger, user, or other person inside or outside of the vehicle (or to other vehicles) based on the analysis of the collected data. Additional details regarding the various embodiments that are provided by system 100 are provided below.

Return-oriented programming (ROP) (also referred to as Jump oriented programming (JOP)) is a computer security exploit technique that allows an attacker to execute code in the presence of security defenses such as executable space protection and code signing.

In this technique, an attacker gains control of the call stack (hereinafter "stack") to hijack program control flow and then executes carefully chosen machine instruction sequences that are already present in the machine's memory, called "gadgets". Each gadget typically ends in a return instruction and is located in a subroutine within the existing program and/or shared library code. Chained together, these gadgets allow an attacker to perform arbitrary operations on a machine employing defenses that thwart simpler attacks.

Return-oriented programming is an advanced version of a stack smashing attack. Generally, these types of attacks arise when an adversary manipulates the call stack by taking advantage of a bug in the program, often a buffer overrun. In a buffer overrun, a function that does not perform proper bounds checking before storing user-provided data into memory will accept more input data than it can store properly. If the data is being written onto the stack, the excess data may overflow the space allocated to the function's variables (e.g., "locals" in the stack) and overwrite the return address. This address will later be used by the function to redirect control flow back to the caller. If it has been overwritten, control flow will be diverted to the location specified by the new return address.

In a standard buffer overrun attack, the attacker would simply write attack code (the "payload") onto the stack and then overwrite the return address with the location of these newly written instructions. Until the late 1990s, major operating systems did not offer any protection against these attacks. For instance, Microsoft Windows provided no buffer-overrun protections until 2004.

Eventually, operating systems began to combat the exploitation of buffer overflow bugs by marking the memory where data is written as non-executable, a technique known as executable space protection. With this enabled, the machine would refuse to execute any code located in user-writable areas of memory, preventing the attacker from placing payload on the stack and jumping to it via a return address overwrite. Hardware support later became available to strengthen this protection.

With data execution prevention, an adversary cannot execute maliciously injected instructions because a typical buffer overflow overwrites contents in the data section of memory, which is marked as non-executable. To defeat this, a return-oriented programming attack does not inject malicious code, but rather uses instructions that are already present, called "gadgets", by manipulating return addresses. A typical data execution prevention cannot defend against this attack because the adversary did not use malicious code but rather combined "good" instructions by changing return addresses; therefore, the code used would not be marked non-executable.

Return-oriented programming builds on the borrowed code chunks approach and extends it to provide Turing complete functionality to the attacker, including loops and conditional branches.

Put another way, return-oriented programming provides a fully functional "language" that an attacker can use to make a compromised machine perform any operation desired. It has been demonstrated how all the important programming constructs can be simulated using return-oriented programming against a target application linked with the C standard library and containing an exploitable buffer overrun vulnerability.

A return-oriented programming attack is superior to the other attack types discussed both in expressive power and in resistance to defensive measures. None of the counter-exploitation techniques mentioned above, including removing potentially dangerous functions from shared libraries altogether, are effective against a return-oriented programming attack.

There may be provided a system, a method, and a non-transitory computer readable medium that maintain flow control integrity by detecting return-oriented programming attacks.

While the return-oriented programming attempts to jump between gadgets following a flow that differs from the original flow of a program, the method verifies that the original (also referred to as proper or non-compromised) flow is maintained.

When executing instructions of a software environment, the method checks whether the flow passed through the entry region of the software environment and blocks flows that jumped to a gadget without passing through the entry region.

The entry region may be modified (for example by a compiler) to include a shadow stack update instruction that updates the shadow stack with a shadow environment identifier that identifies the software environment of the entry region.

When an attempt to change a flow (from a current software environment) is made (or is about to be made), the method checks whether the shadow environment identifier equals a current environment identifier (that identifies the current software environment).

A mismatch indicates that the flow did not pass through the entry region of the current environment identifier - and a return-oriented programming attack is detected.

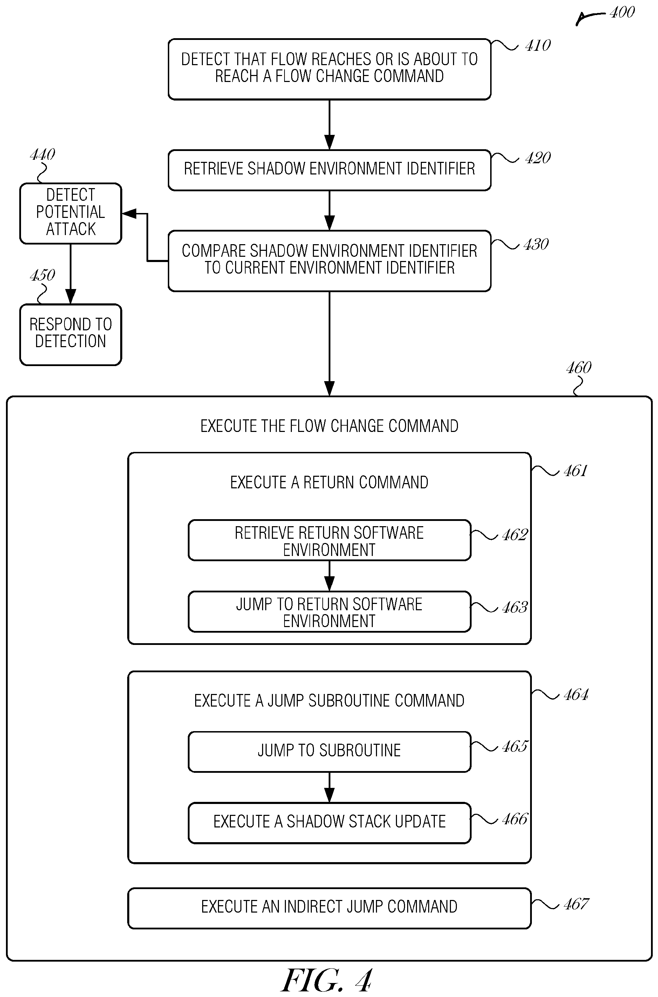

FIG. 4 illustrates an example of method 400 for evaluating flow control integrity. Method 400 may start by step 410 of detecting that a flow reached a flow change command or is about to reach the flow change command. The flow change command belongs to a current software environment. The current software environment is identified by a current environment identifier.

Examples of a flow change command include a return command (for returning from a direct jump command), an indirect jump command (that may jump to an address within the current software environment), and a jump subroutine command.

The operation of detecting that a flow is about to reach the flow change command may include searching for the flow change command in a command stack even before the program counter points to the flow change command. The flow change command may be searched within a distance (for example, in proximity - such as between 1 and 10 entries or any other value) from the entry pointed by the program counter.

Step 410 may be followed by step 420 of retrieving a shadow environment identifier that is a last environment identifier stored in a shadow stack. The last environment identifier may be the most updated environment identifier stored in the shadow stack.

The shadow environment identifier identifies a software environment having an entry region that was the last entry region that was passed by the flow. The entry region includes a shadow stack update instruction that was executed by the flow.

Step 420 may be followed by step 430 of comparing the shadow environment identifier to the current environment identifier.

When the shadow environment identifier differs from the current environment identifier, then step 430 may be followed by step 440 of detecting a potential attack. The potential attack may be a return-oriented programming attack.

Step 440 may be followed by step 450 of responding to the detecting of the potential attack. The responding may include generating an alert, stopping the execution of the flow, rebooting a processor, and the like.

When the shadow environment identifier equals the current environment identifier then step 430 is followed by step 460 of executing the flow change command.

Step 460 may include at least one of the following steps:
1) Step 461 of executing a return command.
2) Step 464 of executing a jump subroutine command.
3) Step 467 of executing an indirect jump command.

Step 461 may include steps 462 and 463.

Step 462 may include retrieving, from the shadow stack, a return environment identifier that identifies a return software environment. Step 462 may be followed by step 463 of jumping to (returning to) the return software environment.

Step 464 may include steps 465 and 466. Step 465 may include jumping to the subroutine. Step 466 may include executing a shadow stack update included in the entry region of the subroutine. Step 466 may include storing in the shadow stack a shadow environment identifier that identifies the subroutine.

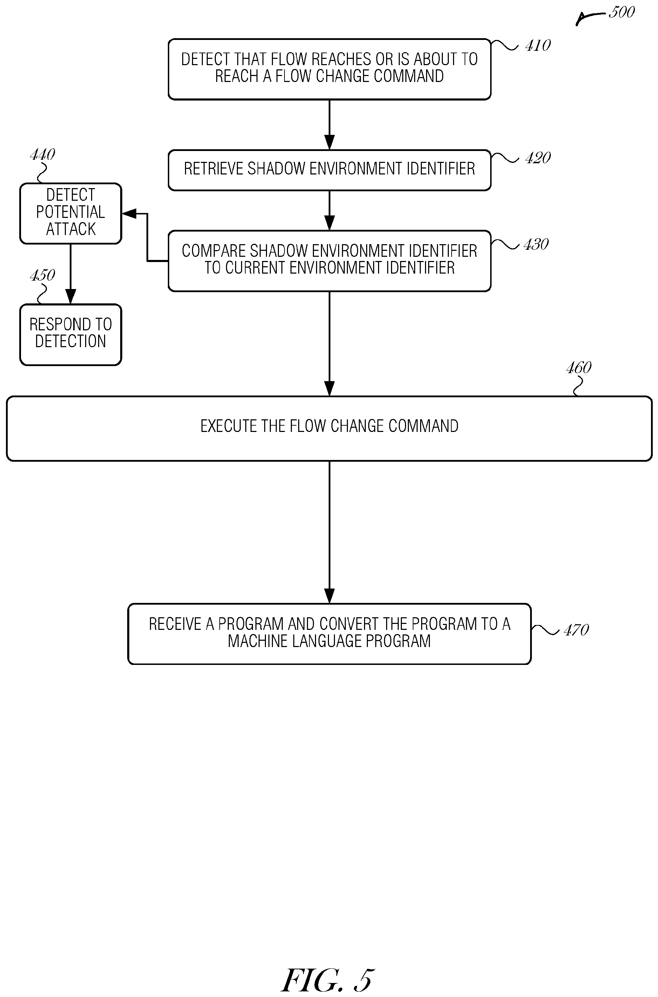

FIG. 5 is another example of method 500. Method 500 differs from method 400 by including step 470 of receiving a program (for example a high level program) and converting, by a complier, the program to a machine language program (also referred to as code). The converting may include modifying an entry region of at least one software environment of the machine language program to include a shadow stack update instruction that updates the shadow stack with a shadow environment identifier that identifies the software environment that includes the entry region.

In addition, FIG. 5 does not illustrate (for simplicity of explanation) steps 461-467.

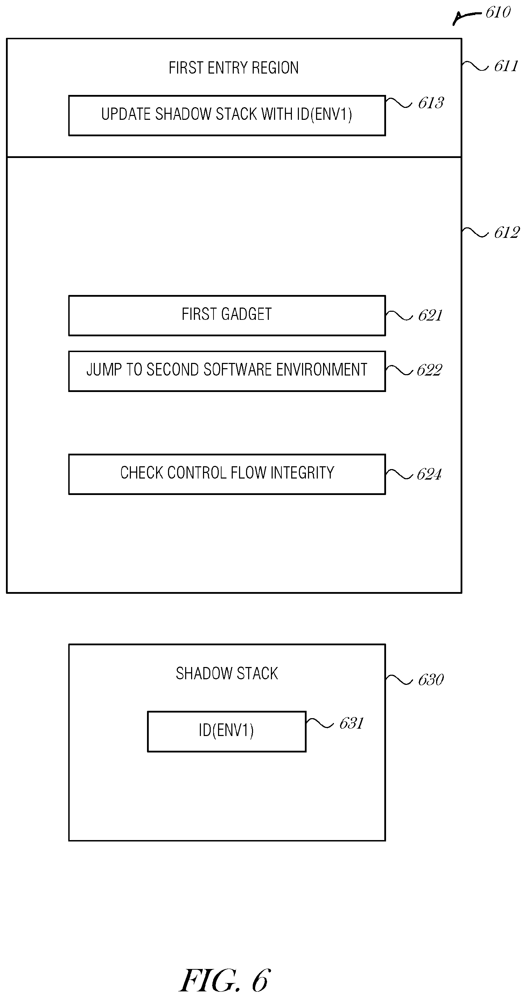

FIG. 6 illustrates an example of a first software environment 610 and a shadow stack 630. The first software environment 610 includes a first entry region 611 and one or more other parts 612 that include a first gadget 621, a flow change command such as "jump to second software environment" command 622, and a check control flow integrity command 624. The jump command may be a direct or indirect jump command.

If the flow executed the first software environment 610 in a proper manner, starting from executing instructions of the first entry region 611, then the flow will execute a shadow stack update instruction such as "update shadow stack with ID(ENV1)" 613, where ID(ENV1) identifies the first software environment 610.

If the flow arrives to the first software environment 610 as result of a return-oriented programming attack, without passing through the first entry region 611, then the shadow stack will not be updated with ID(ENV1).

The instructions within the one or more other parts 612 are executed until reaching (or before reaching) the control flow integrity command 624 that will compare ID(ENV1) to a shadow environment identifier stored in the shadow stack 630 and respond according to the outcome of the comparison.

FIG. 6 illustrates the scenario in which the flow executed the first software environment 610 in a proper manner and executed "update shadow stack with ID(ENV1)" 613, so that the shadow environment identifier 631 that is stored in the shadow stack 630 equals ID(ENV1). In this case, the flow continues with the execution of a jump to second software environment command.

Otherwise, the shadow stack 630 will not store ID(ENV1) and an attack is detected.

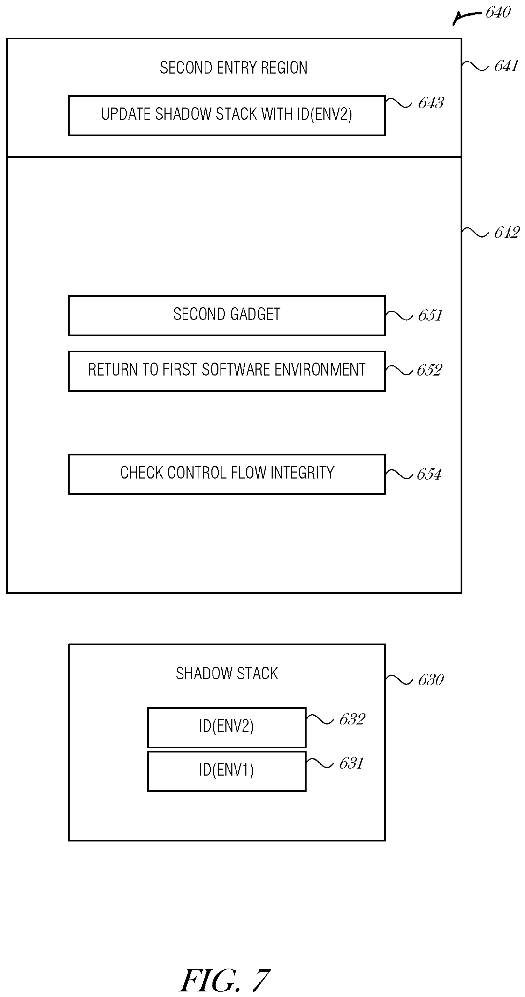

FIG. 7 illustrates an example of a second software environment 640, and a shadow stack 630.

The second software environment 640 includes a second entry region 641 and one or more other parts 642 that include a second gadget 651, a flow change command such as return 652 (return to the first software environment), and a check control flow integrity command 654.

When the flow successfully jumped from the first software environment to the second entry region 641 of the second software environment, it executed an update shadow stack with ID(ENV2) command 643, and the shadow stack 630 stores ID(ENV2) 632. The shadow stack 630 also stores, as a return environment identifier ID(ENV1) 631.

In this case, the execution of check control flow integrity command 654 will indicate that the return command may be executed, and the flow will use return environment identifier ID(ENV1) 631 for returning to the first software environment.

If second gadget 651 was reached without passing through the second entry region 641, then the check control integrity command 654 will find that ID(ENV2) differs from the shadow environment identifier (for example ID(ENV1)) and an attack is detected.

Any machine language program mentioned above may be executed by the processing unit 110 of FIGS. 2A-2D, or by any processor that may include one or more processing circuits. A processing circuit may include one or more field programmable gate arrays (FPGAs), one of more graphical processing units (GPUs), one of more general purpose units, one of more central processing units (CPUs), one or more hardware accelerators, one or more integrated circuits, and the like.

Any of method describing steps may include more steps than those illustrated in the figure, only the steps illustrated in the figure or substantially only the steps illustrated in the figure. The same applies to components of a device, processor or system and to instructions stored in any non-transitory computer readable storage medium.

The invention may also be implemented in a computer program for running on a computer system, at least including code portions for performing steps of a method according to the invention when run on a programmable apparatus, such as a computer system or enabling a programmable apparatus to perform functions of a device or system according to the invention. The computer program may cause the storage system to allocate disk drives to disk drive groups.

A computer program is a list of instructions such as a particular application program and/or an operating system. The computer program may for instance include one or more of: a subroutine, a function, a procedure, an object method, an object implementation, an executable application, an applet, a servlet, a source code, an object code, a shared library/dynamic load library and/or other sequence of instructions designed for execution on a computer system.

The computer program may be stored internally on a non-transitory computer readable medium. All or some of the computer program may be provided on computer readable media permanently, removably or remotely coupled to an information processing system. The computer readable media may include, for example and without limitation, any number of the following: magnetic storage media including disk and tape storage media; optical storage media such as compact disk media (e.g., CD-ROM, CD-R, etc.) and digital video disk storage media; nonvolatile memory storage media including semiconductor-based memory units such as flash memory, EEPROM, EPROM, ROM; ferromagnetic digital memories; MRAM; volatile storage media including registers, buffers or caches, main memory, RAM, etc.

A computer process typically includes an executing (running) program or portion of a program, current program values and state information, and the resources used by the operating system to manage the execution of the process. An operating system (OS) is the software that manages the sharing of the resources of a computer and provides programmers with an interface used to access those resources. An operating system processes system data and user input, and responds by allocating and managing tasks and internal system resources as a service to users and programs of the system.

The computer system may for instance include at least one processing unit or processing circuitry, associated memory and a number of input/output (I/O) devices. When executing the computer program, the computer system processes information according to the computer program and produces resultant output information via I/O devices.

Example embodiment 1 is a system comprising a processing circuit that is configured to: detect that a flow reached a flow change command or is about to reach the flow change command, wherein the flow change command belongs to a current software environment, wherein the current software environment is identified by a current environment identifier; retrieve a shadow environment identifier that is a last environment identifier stored in a shadow stack, wherein the shadow environment identifier identifies a software environment having an entry region that was a last entry region accessed by the flow, wherein the entry region comprises a shadow stack update instruction that was executed by the flow; compare the shadow environment identifier to the current environment identifier; detect a potential attack when the shadow environment identifier differs from the current environment identifier; and executing the flow change command when the shadow environment identifier equals the current environment identifier.

In example embodiment 2, the subject matter of example embodiment 1 includes, wherein the current environment identifier is stored in proximity to the flow change command.

In example embodiment 3, the subject matter of example embodiments 1-2 includes, wherein the detecting of the potential attack is followed by stopping an execution of the flow.

In example embodiment 4, the subject matter of example embodiments 1-3 includes, wherein the entry region was amended by a complier to include the shadow stack update instruction.

In example embodiment 5, the subject matter of example embodiments 1-4 includes, amending, by a complier, the entry region to include the shadow stack update instruction.

In example embodiment 6, the subject matter of example embodiment 1 includes, wherein the flow change command is a return command; and wherein the executing of the return command comprises: (i) retrieving, from the shadow stack, a return environment identifier that identifies a return software environment; and (ii) jumping to the return software environment.

In example embodiment 7, the subject matter of example embodiment 1 or 6 includes, wherein the flow change command is a jump subroutine command for jumping to a subroutine; and wherein the executing of the jump subroutine command comprises: jumping to the subroutine and executing a shadow stack update included in the entry region of the subroutine; wherein the executing of the shadow stack update comprises storing in the shadow stack a shadow environment identifier that identifies the subroutine.

In example embodiment 8, the subject matter of example embodiments 1-7 includes, wherein the flow change command is a jump indirect command for jumping to an address that is stored in a memory element; wherein the address belongs to the current software environment.

In example embodiment 9, the subject matter of example embodiments 1-8 includes, wherein the flow change command is a jump subroutine command.

In example embodiment 10, the subject matter of example embodiments 1-9 includes, wherein the flow change command is a return command.

In example embodiment 11, the subject matter of example embodiments 1-10 includes, wherein the flow change command is jump indirect command.

Example embodiment 12 is a method for evaluating flow control integrity, the method comprises: detecting that a flow reached a flow change command or is about to reach the flow change command, wherein the flow change command belongs to a current software environment, wherein the current software environment is identified by a current environment identifier; retrieving a shadow environment identifier that is a last environment identifier stored in a shadow stack, wherein the shadow environment identifier identifies a software environment having an entry region that was a last entry region accessed by the flow, wherein the entry region comprises a shadow stack update instruction that was executed by the flow; comparing the shadow environment identifier to the current environment identifier; detecting a potential attack when the shadow environment identifier differs from the current environment identifier; and executing the flow change command when the shadow environment identifier (631) equals the current environment identifier.

In example embodiment 13, the subject matter of example embodiment 12 includes, wherein the current environment identifier is stored in proximity to the flow change command.

In example embodiment 14, the subject matter of example embodiment 12 or 13 includes, wherein the detecting of the potential attack is followed by stopping an execution of the flow.

In example embodiment 15, the subject matter of example embodiments 13-15 includes, wherein the entry region was amended by a complier to include the shadow stack update instruction.

In example embodiment 16, the subject matter of example embodiments 12-15 includes, amending, by a complier, the entry region to include the shadow stack update instruction.

In example embodiment 17, the subject matter of example embodiment 12 includes, wherein the flow change command is a return command; and wherein the executing of the return command comprises: (i) retrieving, from the shadow stack, a return environment identifier that identifies a return software environment; and (ii) jumping to the return software environment.

In example embodiment 18, the subject matter of example embodiment 12 or 17 includes, wherein the flow change command is a jump subroutine command for jumping to a subroutine; and wherein the executing of the jump subroutine command comprises: jumping to the subroutine and executing a shadow stack update included in the entry region of the subroutine; wherein the executing of the shadow stack update comprises storing in the shadow stack a shadow environment identifier that identifies the subroutine.

In example embodiment 19, the subject matter of example embodiments 1-18 includes, wherein the flow change command is a jump indirect command for jumping to an address that is stored in a memory element; wherein the address belongs to the current software environment.

In example embodiment 20, the subject matter of example embodiments 12-19 includes, wherein the flow change command is a jump subroutine command.

In example embodiment 21, the subject matter of example embodiments 12-20 includes, wherein the flow change command is a return command.

In example embodiment 22, the subject matter of example embodiments 12-21 includes, wherein the flow change command is jump indirect command.

Example embodiment 23 is a non-transitory computer readable medium that stores instructions, which when executed on a processing circuit, causes the processing circuit to perform operations comprising: detecting that a flow reached a flow change command or is about to reach the flow change command, wherein the flow change command belongs to a current software environment, wherein the current software environment is identified by a current environment identifier; retrieving a shadow environment identifier that is a last environment identifier stored in a shadow stack, wherein the shadow environment identifier identifies a software environment having an entry region that was a last entry region accessed by the flow, wherein the entry region comprises a shadow stack update instruction that was executed by the flow; comparing the shadow environment identifier to the current environment identifier; detecting a potential attack when the shadow environment identifier differs from the current environment identifier; and executing the flow change command when the shadow environment identifier equals the current environment identifier.

In example embodiment 24, the subject matter of example embodiment 23 includes, wherein the current environment identifier is stored in proximity to the flow change command.

In example embodiment 25, the subject matter of example embodiment 23 or 24 includes, wherein the detecting of the potential attack is followed by stopping an execution of the flow.

In example embodiment 26, the subject matter of example embodiments 23-25 includes, wherein the entry region was amended by a complier to include the shadow stack update instruction.

In example embodiment 27, the subject matter of example embodiments 23-26 includes, that stores instructions for amending, by a complier, the entry region to include the shadow stack update instruction.

In example embodiment 28, the subject matter of example embodiment 23 includes, wherein the flow change command is a return command; and wherein the executing of the return command comprises: (i) retrieving, from the shadow stack, a return environment identifier that identifies a return software environment; and (ii) jumping to the return software environment.

In example embodiment 29, the subject matter of example embodiment 23 or 28 includes, wherein the flow change command is a jump subroutine command for jumping to a subroutine; and wherein the executing of the jump subroutine command comprises: jumping to the subroutine and executing a shadow stack update included in the entry region of the subroutine; wherein the executing of the shadow stack update comprises storing in the shadow stack a shadow environment identifier that identifies the subroutine.

In example embodiment 30, the subject matter of example embodiments 23-29 includes, wherein the flow change command is a jump indirect command for jumping to an address that is stored in a memory element; wherein the address belongs to the current software environment.

In example embodiment 31, the subject matter of example embodiments 23-30 includes, wherein the flow change command is a jump subroutine command.

In example embodiment 32, the subject matter of example embodiments 23-31 includes, wherein the flow change command is a return command.

In example embodiment 33, the subject matter of example embodiments 25-32 includes, wherein the flow change command is jump indirect command.

Example embodiment 34 is at least one machine-readable medium including instructions that, when executed by processing circuitry, cause the processing circuitry to perform operations to implement of any of example embodiments 1-33.

The connections as discussed herein may be any type of connection suitable to transfer signals from or to the respective nodes, units or devices, for example via intermediate devices. Accordingly, unless implied or stated otherwise, the connections may for example be direct connections or indirect connections. The connections may be illustrated or described in reference to being a single connection, a plurality of connections, unidirectional connections, or bidirectional connections. However, different embodiments may vary the implementation of the connections. For example, separate unidirectional connections may be used rather than bidirectional connections and vice versa. Also, plurality of connections may be replaced with a single connection that transfers multiple signals serially or in a time multiplexed manner. Likewise, single connections carrying multiple signals may be separated out into various different connections carrying subsets of these signals. Therefore, many options exist for transferring signals.

Although specific conductivity types or polarity of potentials have been described in the examples, it will be appreciated that conductivity types and polarities of potentials may be reversed.

Each signal described herein may be designed as positive or negative logic. In the case of a negative logic signal, the signal is active low where the logically true state corresponds to a logic level zero. In the case of a positive logic signal, the signal is active high where the logically true state corresponds to a logic level one. Note that any of the signals described herein may be designed as either negative or positive logic signals. Therefore, in alternate embodiments, those signals described as positive logic signals may be implemented as negative logic signals, and those signals described as negative logic signals may be implemented as positive logic signals.

The boundaries between logic blocks are merely illustrative and that alternative embodiments may merge logic blocks or circuit elements or impose an alternate decomposition of functionality upon various logic blocks or circuit elements. Thus, it is to be understood that the architectures depicted herein are merely exemplary, and that in fact many other architectures may be implemented which achieve the same functionality.

Any arrangement of components to achieve the same functionality is effectively "associated" such that the desired functionality is achieved. Hence, any two components herein combined to achieve a particular functionality may be seen as "associated with" each other such that the desired functionality is achieved, irrespective of architectures or intermedial components. Likewise, any two components so associated can also be viewed as being "operably connected," or "operably coupled," to each other to achieve the desired functionality.

Furthermore, boundaries between the above described operations merely illustrative. The multiple operations may be combined into a single operation, a single operation may be distributed in additional operations and operations may be executed at least partially overlapping in time. Moreover, alternative embodiments may include multiple instances of a particular operation, and the order of operations may be altered in various other embodiments.

Also for example, in one embodiment, the illustrated examples may be implemented as circuitry located on a single integrated circuit or within a same device. Alternatively, the examples may be implemented as any number of separate integrated circuits or separate devices interconnected with each other in a suitable manner.

Also for example, the examples, or portions thereof, may implemented as soft or code representations of physical circuitry or of logical representations convertible into physical circuitry, such as in a hardware description language of any appropriate type.

## Claims

1. A system (100, 220, 230, 240) comprising a processing circuit that is configured to:
detect that a flow reached a flow change command or is about to reach the flow change command, wherein the flow change command belongs to a current software environment, wherein the current software environment is identified by a current environment identifier;
retrieve a shadow environment identifier (631) that is a last environment identifier stored in a shadow stack (630), wherein the shadow environment identifier (631) identifies a software environment (610, 640) having an entry region (611, 641) that was a last entry region accessed by the flow, wherein the entry region (611, 641) comprises a shadow stack update instruction that was executed by the flow;
compare the shadow environment identifier (631) to the current environment identifier;
detect a potential attack when the shadow environment identifier differs from the current environment identifier; and
execute the flow change command when the shadow environment identifier (631) equals the current environment identifier.

2. The system (100, 220, 230, 240) according to claim 1, wherein the current environment identifier is stored in proximity to the flow change command.

3. The system (100, 220, 230, 240) according to claim 1, wherein the detecting of the potential attack is followed by stopping an execution of the flow.

4. The system (100, 220, 230, 240) according to claim 1, wherein the entry region (611, 641) was amended by a compiler to include the shadow stack update instruction.

5. The system according to claim 1, comprising amending, by a compiler, the entry region to include the shadow stack update instruction.

6. The system (100, 220, 230, 240) according to claim 1, wherein the flow change command is a return command; and wherein the executing of the return command comprises:
retrieving, from the shadow stack (630), a return environment identifier that identifies a return software environment; and jumping to the return software environment.

7. The system (100, 220, 230, 240) according to claim 1, wherein the flow change command is a jump subroutine command for jumping to a subroutine; and wherein the executing of the jump subroutine command comprises: jumping to the subroutine and executing a shadow stack update included in the entry region (611, 641) of the subroutine; wherein the executing of the shadow stack update comprises storing in the shadow stack (630) a shadow environment identifier (631) that identifies the subroutine.

8. The system (100, 220, 230, 240) according to claim 1, wherein the flow change command is:
a jump indirect command for jumping to an address that is stored in a memory element; wherein the address belongs to the current software environment;
a jump subroutine command; or
a return command.

9. A method (400, 500) for evaluating flow control integrity, comprising:
detecting that a flow reached a flow change command or is about to reach the flow change command, wherein the flow change command belongs to a current software environment, wherein the current software environment is identified by a current environment identifier;
retrieving a shadow environment identifier (631) that is a last environment identifier stored in a shadow stack (630), wherein the shadow environment identifier (631) identifies a software environment (610, 640) having an entry region (611, 641) that was a last entry region accessed by the flow, wherein the entry region (611, 641) comprises a shadow stack update instruction that was executed by the flow;
comparing the shadow environment identifier (631) to the current environment identifier;
detecting a potential attack when the shadow environment identifier differs from the current environment identifier; and
executing the flow change command when the shadow environment identifier (631) equals the current environment identifier.

10. The method (400, 500) according to claim 9, wherein the current environment identifier is stored in proximity to the flow change command.

11. The method (400, 500) according to claim 9, wherein the detecting of the potential attack is followed by stopping an execution of the flow.

12. The method (400, 500) according to claim 9, comprising amending, by a compiler, the entry region (611, 641) to include the shadow stack update instruction.

13. The method (400, 500) according to claim 9, wherein the flow change command is a return command; and wherein the executing of the return command comprises: retrieving, from the shadow stack (630), a return environment identifier that identifies a return software environment; and jumping to the return software environment.

14. The method (400, 500) according to claim 9, wherein the flow change command is a jump subroutine command for jumping to a subroutine; and wherein the
executing of the jump subroutine command comprises:
jumping to the subroutine and executing a shadow stack update included in the entry region (611, 641) of the subroutine; wherein the executing of the shadow stack update comprises storing in the shadow stack (630) a shadow environment identifier (631) that identifies the subroutine.

15. The method (400, 500) according to claim 9, wherein the flow change command is:
a jump indirect command for jumping to an address that is stored in a memory element; wherein the address belongs to the current software environment;
jump subroutine command; or
a return command.

16. A non-transitory computer readable medium that stores instructions, which when executed on a processing circuit, causes the processing circuit to perform the operations of the method according to one of claims 9 to 15.

## Patentansprüche

1. Ein System (100, 220, 230, 240), das eine Verarbeitungsschaltung umfasst, die konfiguriert ist, um:
zu erkennen, dass ein Fluss einen Flussänderungsbefehl erreicht hat oder kurz davor steht, den Flussänderungsbefehl zu erreichen, wobei der Flussänderungsbefehl zu einer aktuellen Softwareumgebung gehört, wobei die aktuelle Softwareumgebung durch einen aktuellen Umgebungsidentifikator identifiziert wird;
einen Schattenumgebungsidentifikator (631) abzurufen, der ein letzter in einem Schattenstapel (630) gespeicherter Umgebungsidentifikator ist, wobei der Schattenumgebungsidentifikator (631) eine Softwareumgebung (610, 640) identifiziert, die einen Eintragsbereich (611, 641) hat, auf den der Fluss zuletzt zugegriffen hat, wobei der Eintragsbereich (611, 641) einen Schattenstapel-Aktualisierungsbefehl umfasst, der von dem Fluss ausgeführt wurde;
den Schattenumgebungsidentifikator (631) mit dem aktuellen Umgebungsidentifikator zu vergleichen;
einen potenziellen Angriff zu erkennen, wenn sich die Schattenumgebungsidentifikator von dem aktuellen Umgebungsidentifikator unterscheidet; und
den Flussänderungsbefehl auszuführen, wenn der Schattenumgebungsidentifikator (631) gleich dem aktuellen Umgebungsidentifikator ist.

2. Das System (100, 220, 230, 240) nach Anspruch 1, wobei der aktuelle Umgebungsidentifikator in der Nähe des Flussänderungsbefehls gespeichert wird.

3. Das System (100, 220, 230, 240) nach Anspruch 1, wobei auf die Erkennung des potenziellen Angriffs das Anhalten der Flussausführung folgt.

4. Das System (100, 220, 230, 240) nach Anspruch 1, wobei der Eingangsbereich (611, 641) von einem Compiler so geändert wurde, dass er den Befehl zur Aktualisierung des Schattenstapels enthält.

5. Das System nach Anspruch 1, bei dem der Eingangsbereich durch einen Compiler so geändert wurde, dass er die Schattenstapel-Aktualisierungsanweisung enthält.

6. Das System (100, 220, 230, 240) nach Anspruch 1, wobei der Flussänderungsbefehl ein Rückgabebefehl ist; und wobei die Ausführung des Rückgabebefehls Folgendes umfasst:
das Abrufen eines Rückgabeumgebungsidentifikators aus dem Schattenstapel (630), der eine Rückgabesoftwareumgebung identifiziert, und das Springen zu der Rückgabesoftwareumgebung.

7. Das System (100, 220, 230, 240) nach Anspruch 1, wobei der Flussänderungsbefehl ein Unterprogrammsprungbefehl ist, um zu einem Unterprogramm zu springen; und wobei das Ausführen des Unterprogrammsprungbefehls Folgendes umfasst: Springen zum Unterprogramm und Ausführen einer Schattenstapel-Aktualisierung, die im Eingangsbereich (611, 641) des Unterprogramms enthalten ist; wobei das Ausführen der Schattenstapel-Aktualisierung das Speichern eines Schattenumgebungsidentifikators (631), der das Unterprogramm identifiziert, im Schattenstapel (630) umfasst.

8. Das System (100, 220, 230, 240) nach Anspruch 1, wobei der Flussänderungsbefehl Folgendes ist:
ein indirekter Sprungbefehl zum Springen zu einer Adresse, die in einem Speicherelement gespeichert ist;
wobei die Adresse zur aktuellen Softwareumgebung gehört;
ein Unterprogrammsprungbefehl; oder
ein Rückgabebefehl.

9. Ein Verfahren (400, 500) zur Bewertung der Integrität der Flusskontrolle, das Folgendes umfasst:
Erkennen, dass ein Fluss einen Flussänderungsbefehl erreicht hat oder kurz davor steht, den Flussänderungsbefehl zu erreichen, wobei der Flussänderungsbefehl zu einer aktuellen Softwareumgebung gehört, wobei die aktuelle Softwareumgebung durch einen aktuellen Umgebungsidentifikator identifiziert wird;
Abrufen eines Schattenumgebungsidentifikators (631), der ein letzter in einem Schattenstapel (630) gespeicherter Umgebungsidentifikator ist, wobei der Schattenumgebungsidentifikator (631) eine Softwareumgebung (610, 640) identifiziert, die einen Eintragsbereich (611, 641) hat, auf den der Fluss zuletzt zugegriffen hat, wobei der Eintragsbereich (611, 641) einen Schattenstapel-Aktualisierungsbefehl umfasst, der von dem Fluss ausgeführt wurde;
Vergleichen des Schattenumgebungsidentifikators (631) mit dem aktuellen Umgebungsidentifikator;
Erkennen eines potenziellen Angriffs, wenn sich die Schattenumgebungsidentifikator von dem aktuellen Umgebungsidentifikator unterscheidet; und
Ausführen des Flussänderungsbefehls, wenn der Schattenumgebungsidentifikator (631) gleich dem aktuellen Umgebungsidentifikator ist.

10. Das Verfahren (400, 500) nach Anspruch 9, wobei der aktuelle Umgebungsidentifikator in der Nähe des Flussänderungsbefehls gespeichert wird.

11. Das Verfahren (400, 500) nach Anspruch 9, wobei auf die Erkennung des potenziellen Angriffs das Anhalten der Flussausführung folgt.

12. Das Verfahren (400, 500) nach Anspruch 9, bei dem der Eingangsbereich (611, 641) durch einen Compiler so geändert wurde, dass er die Schattenstapel-Aktualisierungsanweisung enthält.

13. Das Verfahren (400, 500) nach Anspruch 9, wobei der Flussänderungsbefehl ein Rückgabebefehl ist und die Ausführung des Rückgabebefehls Folgendes umfasst: Abrufen eines Rückgabeumgebungsidentifikators aus dem Schattenstapel (630), der eine Rückgabesoftwareumgebung identifiziert, und Springen zur Rückgabesoftwareumgebung.

14. Das Verfahren (400, 500) nach Anspruch 9, wobei der Flussänderungsbefehl ein Sprungunterprogrammbefehl zum Springen zu einem Unterprogramm ist; und wobei das
Ausführen des Unterprogrammsprungbefehls Folgendes umfasst:
Springen zu dem Unterprogramm und Ausführen einer Schattenstapelaktualisierung, die in dem Eingangsbereich (611, 641) des Unterprogramms enthalten ist; wobei das Ausführen der Schattenstapelaktualisierung das Speichern eines Schattenumgebungsidentifikators (631), der das Unterprogramm identifiziert, in dem Schattenstapel (630) umfasst.

15. Das Verfahren (400, 500) nach Anspruch 9, wobei der Flussänderungsbefehl Folgendes ist:
ein indirekter Sprungbefehl zum Springen zu einer Adresse, die in einem Speicherelement gespeichert ist;
wobei die Adresse zur aktuellen Softwareumgebung gehört;
Unterprogrammsprungbefehl; oder
ein Rückgabebefehl.

16. Nicht-übertragbares computerlesbares Medium, das Befehle speichert, die, wenn sie auf einer Verarbeitungsschaltung ausgeführt werden, die Verarbeitungsschaltung veranlassen, die Operationen des Verfahrens nach einem der Ansprüche 9 bis 15 durchzuführen.

## Revendications

1. Système (100, 220, 230, 240) comprenant un circuit de traitement qui est configuré pour :
détecter qu'un flux a atteint une commande de changement de flux ou est sur le point d'atteindre la commande de changement de flux, dans lequel la commande de changement de flux appartient à un environnement logiciel actuel, dans lequel l'environnement logiciel actuel est identifié par un identifiant d'environnement actuel ;
récupérer un identifiant d'environnement fantôme (631) qui est un dernier identifiant d'environnement stocké dans une pile fantôme (630), dans lequel l'identifiant d'environnement fantôme (631) identifie un environnement logiciel (610, 640) ayant une région d'entrée (611, 641) qui était une dernière région d'entrée à laquelle le flux a accédé, dans lequel la région d'entrée (611, 641) comprend une instruction de mise à jour de pile fantôme qui a été exécutée par le flux ;
comparer l'identifiant d'environnement fantôme (631) à l'identifiant d'environnement actuel ;
détecter une attaque potentielle lorsque l'identifiant d'environnement fantôme diffère de l'identifiant d'environnement actuel ; et
exécuter la commande de changement de flux lorsque l'identifiant d'environnement fantôme (631) est égal à l'identifiant d'environnement actuel.

2. Système (100, 220, 230, 240) selon la revendication 1, dans lequel l'identifiant d'environnement actuel est stocké à proximité de la commande de changement de flux.

3. Système (100, 220, 230, 240) selon la revendication 1, dans lequel la détection de l'attaque potentielle est suivie de l'arrêt d'une exécution du flux.

4. Système (100, 220, 230, 240) selon la revendication 1, dans lequel la région d'entrée (611, 641) a été modifiée par un compilateur pour inclure l'instruction de mise à jour de pile fantôme.

5. Système selon la revendication 1, comprenant la modification, par un compilateur, de la région d'entrée pour inclure l'instruction de mise à jour de pile fantôme.

6. Système (100, 220, 230, 240) selon la revendication 1, dans lequel la commande de changement de flux est une commande de retour ; et dans lequel l'exécution de la commande de retour comprend :
la récupération, à partir de la pile fantôme (630), d'un identifiant d'environnement de retour qui identifie un environnement logiciel de retour ; et le saut à l'environnement logiciel de retour.

7. Système (100, 220, 230, 240) selon la revendication 1, dans lequel la commande de changement de flux est une commande de sous-routine de saut pour sauter à une sous-routine ; et dans lequel l'exécution de la commande de sous-routine de saut comprend : le saut à la sous-routine et l'exécution d'une mise à jour de pile fantôme incluse dans la région d'entrée (611, 641) de la sous-routine ; dans lequel l'exécution de la mise à jour de pile fantôme comprend le stockage dans la pile fantôme (630) d'un identifiant d'environnement fantôme (631) qui identifie la sous-routine.

8. Système (100, 220, 230, 240) selon la revendication 1, dans lequel la commande de changement de flux est :
une commande indirecte de saut pour sauter à une adresse qui est stockée dans un élément de mémoire ; dans lequel l'adresse appartient à l'environnement logiciel actuel ;
une commande de sous-routine de saut ; ou une commande de retour.

9. Procédé (400, 500) d'évaluation de l'intégrité de contrôle de flux, comprenant :
la détection qu'un flux a atteint une commande de changement de flux ou est sur le point d'atteindre la commande de changement de flux, dans lequel la commande de changement de flux appartient à un environnement logiciel actuel, dans lequel l'environnement logiciel actuel est identifié par un identifiant d'environnement actuel ;
la récupération d'un identifiant d'environnement fantôme (631) qui est un dernier identifiant d'environnement stocké dans une pile fantôme (630), dans lequel l'identifiant d'environnement fantôme (631) identifie un environnement logiciel (610, 640) ayant une région d'entrée (611, 641) qui était une dernière région d'entrée à laquelle le flux a accédé, dans lequel la région d'entrée (611, 641) comprend une instruction de mise à jour de pile fantôme qui a été exécutée par le flux ;
la comparaison de l'identifiant d'environnement fantôme (631) à l'identifiant d'environnement actuel ;
la détection d'une attaque potentielle lorsque l'identifiant d'environnement fantôme diffère de l'identifiant d'environnement actuel ; et
l'exécution de la commande de changement de flux lorsque l'identifiant d'environnement fantôme (631) est égal à l'identifiant d'environnement actuel.

10. Procédé (400, 500) selon la revendication 9, dans lequel l'identifiant d'environnement actuel est stocké à proximité de la commande de changement de flux.

11. Procédé (400, 500) selon la revendication 9, dans lequel la détection de l'attaque potentielle est suivie de l'arrêt d'une exécution du flux.

12. Procédé (400, 500) selon la revendication 9, comprenant la modification, par un compilateur, de la région d'entrée (611, 641) pour inclure l'instruction de mise à jour de pile fantôme.

13. Procédé (400, 500) selon la revendication 9, dans lequel la commande de changement de flux est une commande de retour ; et dans lequel l'exécution de la commande de retour comprend : la récupération, à partir de la pile fantôme (630), d'un identifiant d'environnement de retour qui identifie un environnement logiciel de retour ; et le saut à l'environnement logiciel de retour.

14. Procédé (400, 500) selon la revendication 9, dans lequel la commande de changement de flux est une commande de sous-routine de saut ; et dans lequel l'exécution de la commande de sous-routine de saut comprend :
le saut à la sous-routine et l'exécution d'une mise à jour de pile fantôme incluse dans la région d'entrée (611, 641) de la sous-routine ; dans lequel l'exécution de la mise à jour de pile fantôme comprend le stockage dans la pile fantôme (630) d'un identifiant d'environnement fantôme (631) qui identifie la sous-routine.

15. Procédé (400, 500) selon la revendication 9, dans lequel la commande de changement de flux est :
une commande indirecte de saut pour sauter à une adresse qui est stockée dans un élément de mémoire ; dans lequel l'adresse appartient à l'environnement logiciel actuel ;
une commande de sous-routine de saut ; ou
une commande de retour.

16. Support non transitoire lisible par ordinateur qui stocke des instructions qui, lorsqu'elles sont exécutées sur un circuit de traitement, amènent le circuit de traitement à effectuer les opérations du procédé selon l'une des revendications 9 à 15.
